# EUROPÄISCHE PATENTSCHRIFT

(11) **EP 0 615 531 B1**
(45) Veröffentlichungstag und Bekanntmachung des Hinweises auf die Patenterteilung: **03.01.2001**
(21) Anmeldenummer: 93921842.6
(22) Anmeldetag: 23.09.1993
(51) Int. Cl.: C08K 9/06, C08K 3/22

(54) **OBERFLÄCHENMODIFIZIERTE OXIDPARTIKEL UND IHRE ANWENDUNG ALS FÜLL- UND MODIFIZIERUNGSMITTEL IN POLYMERMATERIALIEN**
SURFACE-MODIFIED OXIDE PARTICLES AND THEIR USE AS FILLERS AND MODIFIERS IN POLYMER MATERIALS
PARTICULES D'OXYDE MOFIDIEES EN SURFACE ET LEUR UTILISATION COMME AGENTS DE CHARGE ET DE MODIFICATION DANS DES MATERIAUX POLYMERES

(30) Priorität: 05.10.1992 DE 4233396
(43) Veröffentlichungstag der Anmeldung: 21.09.1994
(73) Patentinhaber: MERCK PATENT GmbH, 64293 Darmstadt (DE); HOECHST AKTIENGESELLSCHAFT, 65926 Frankfurt am Main (DE)
(72) Erfinder: KINKEL, Joachim, D-55452 Guldental (DE); MARQUARD, Kurt, D-64354 Reinheim (DE); POHL, Ludwig, D-64285 Darmstadt (DE)
(86) Internationale Anmeldenummer: EP9302579
(87) Internationale Veröffentlichungsnummer: WO9407948

(56) Entgegenhaltungen:
- EP-A- 0 114 636
- EP-A- 0 236 945
- WO-A-90/02779
- US-A- 4 328 041

## Beschreibung

Die Erfindung betrifft Oxidpartikel, die mit kovalent gebundenen speziellen organischen Gruppen oberflächenmodifiziert sind, und deren Anwendung als Füll- und Modifizierungsmittel in Polymermaterialien, insbesondere Polymerfolien auf Polyesterbasis.

In vielen technischen und anderen Anwendungen treten Polymermaterialien in Erscheinung, in die anorganische Füllstoffe inkorporiert sind. Die anorganischen Füllstoffe haben dabei häufig nicht nur Ersatz- und Verdünnungsfunktion, sondern dienen in vieler Hinsicht der Modifizierung des polymeren Matrixmaterials oder verleihen diesem erst bestimmte Eigenschaften. Ein häufiges und wohlbekanntes Beispiel hierfür ist etwa die Pigmentierung von Polymermaterialien bzw. den daraus hergestellten Gegenständen mit anorganischen Pigmenten zur Farbgebung und/oder zur Verleihung bestimmter optischer oder visuell-ästhetischer Eigenschaften.

Bei der vorliegenden Erfindung steht die Modifizierung von Polymermaterialien, insbesondere von solchen auf Polyesterbasis, die für die Herstellung von Folien vorgesehen sind, im Vordergrund. Folien dieser Art finden vielfältige Anwendung z.B. als Trägerfolien für magnetische Aufzeichnungsmedien wie Audio-, Video- und Computerbänder sowie Floppydiscs etc., als Dielektrikum in Kondensatoren, als Trägerfolien für reprographische Zwecke wie etwa bei Thermodruckbändern, als Präge- und Trennfolien, und nicht zuletzt als Verpackungsmaterial.

Folien mit gleichmäßiger und vollständig glatter Oberfläche haben generell die Eigenschaft, an sich und an den Gegenständen, mit denen sie in Kontakt kommen, zu haften. Hieraus resultiert ein schlechtes Gleitverhalten, das sich bei Auf- und Abwickelvorgängen bereits während der Produktion als auch bei Weiterverarbeitung und späterer Anwendung negativ bemerkbar macht. Es ist allgemein bekannter Stand der Technik, die Folien bzw. deren Oberflächen durch Einarbeitung von anorganischen Partikeln so zu modifizieren, daß sie eine bestimmte, anforderungsgerechte Oberflächenrauhigkeit aufweisen. Die Einarbeitung der Partikel in entsprechender Dimensionierung und Menge kann auf der Stufe des Folienrohstoffes oder während der Folienherstellung erfolgen. Wesentlich ist, daß letztendlich in ausreichender Menge Partikel so auf bzw. in der Folienoberfläche sitzen, daß sie zu einem gewissen Maße über die Oberflächenebene herausragen und somit sozusagen als Abstandshalter wirken. Bei magnetischen Aufzeichnungsmaterialien wird so ein gleichmäßiges Gleiten an Magnetköpfen und anderen bandführenden Teilen gewährleistet. EP 257611 und EP 261430 beschreiben beispielsweise eine derartige Modifizierung von Polyesterfolien für derartige Einsatzzwecke mit SiO₂-Partikeln. Ein ähnlicher Stand der Technik, wobei die Oxidpartikel hochmonodispers, unporös und sphärisch sind, und mit einem Silan behandelt wurden ist aus EP 236945 bekannt.

Folien der vorstehend beschriebenen Art haben jedoch gravierende Nachteile. Aufgrund nur unzureichender Haftung der Partikel in der Folienoberfläche werden diese bei Gebrauch von der Folie abgerieben. Hierdurch verschlechtern sich zum einen die Gleiteigenschaften der Folie im Verlaufe des Gebrauchs. Zum anderen führt der Abrieb zu Störungen, was gerade bei magnetischen Aufzeichnungsmedien gravierend ist, weil hierdurch mechanische, elektromagnetische und elektronische Bauteile, die mit dem Magnetband in Berührung kommen, verschmutzt, beschädigt oder zerstört werden können. Zum dritten sind gerade bei sehr dünnen Folien die Vertiefungen, in denen die Partikel sitzen, oder die sie nach Abrieb in der Folienoberfläche hinterlassen, Stellen der mechanischen Schwächung oder anderweitigen Störung. Diese können zu Rissen, bei Magnetbändern zusätzlich zu Störungen der magnetischen Eigenschaften bis hin zu Informationsverlust, und bei Kondensatorfolien zu Störungen der dielektrischen Eigenschaften bis hin zu elektrischem Durchschlag führen.

Ein weiteres Problem ist das folgende:

Bei der Herstellung werden die Folien zur Verbesserung ihrer Zug- und Reißfestigkeit häufig mono- oder biaxialen Streckvorgängen unterworfen. Dies ist besonders zutreffend für Folien aus Polyester, insbesondere aus Polyethylenterephthalat, welche bei mono- oder biaxialer Orientierung aufgrund überlegener Eigenschaften in Bezug auf Zugfestigkeit, Reißfestigkeit, Elastizitätsmodul, Transparenz, chemische und thermische Beständigkeit in den oben genannten Anwendungen als bevorzugt gelten.

Bei der Verstreckung werden die Stellen, an denen die anorganischen Partikel sitzen, zu mulden- oder wannenförmigen Vertiefungen ausgezogen, in deren Zentren die Partikel mit entsprechend verringerter Haftung lokalisiert sind. Dies führt naturgemäß zu einem vermehrten Ablösen der Partikel mit der Folge einer Verstärkung der oben angeführten negativen Effekte. In REM-Aufnahmen verstreckter Folien sind die ausgezogenen Vertiefungen mit den Partikeln wie auch die leeren Vertiefungen, sogenannte "voids", sehr deutlich zu erkennen.

Der Erfindung lag daher die Aufgabe zugrunde, eine Verbesserung der Einbindung der anorganischen Partikel in das Folienmaterial zu erreichen, so daß die oben genannten negativen Effekte in verringertem Maße oder nicht mehr auftreten.

Es wurde nun gefunden, daß Oxidpartikel mit einer Oberflächenmodifizierung durch kovalent gebundene organische Gruppen, welche funktionelle Gruppen aufweisen, durch die sich eine kovalente Einbindung in Polymermaterialien erreichen läßt, durch Behandlung oxidischer Primärpartikel mit einem Silanisierungsmittel der Formel I

[R¹R²R³]Si-(CH₂)ₗ-X-R⁴ (I)

worin
- R¹: Cl oder Alkoxy mit 1-6 C-Atomen
- R², R³: Alkyl mit 1-6 C-Atomen oder die Bedeutung von R¹
- l: die Zahlen 1-6
- X: eine Einfachbindung, O, NH, CONH, NHCONH
- R₄: 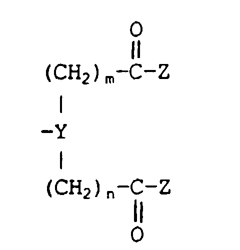 mit Y = CH oder 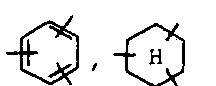 Z = OR oder zwei Reste Z gemeinsam -O-, 〉NR
und m, n die Zahlen 0-6,
oder 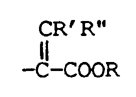 wobei X eine Einfachbindung ist,
mit R, R', R" = H oder Alkyl mit 1-6 C-Atomen, bedeuten,
unter Ausbildung kovalenter Element - Sauerstoff - Siliciumbindungen erhalten werden, vorzüglich als Füll- oder Modifizierungsmittel für Polymermaterialien, insbesondere für die Folienherstellung eignen. Durch die spezifische Oberflächenmodifizierung der Partikel läßt sich ein Einbau der Partikel durch kovalente chemische Bindung in das Polymermaterial erreichen. Dies ist besonders vorteilhaft beim Einsatz diese Partikel enthaltender Polymermaterialien, insbesondere solcher auf Polyesterbasis, für die Folienherstellung, da dann die vorgenannten Nachteile, insbesondere das Auftreten von "voids" bei verstreckten Folien und deren negative Effekte erheblich verringert oder nicht mehr auftreten.

Gegenstand der Erfindung sind somit Oxidpartikel mit einer Oberflächenmodifizierung durch kovalent gebundene organische Gruppen, erhältlich durch eine Behandlung oxidischer Primärpartikel mit einem Silanisierungsmittel der Formel I.

Gegenstand der Erfindung ist weiterhin ein Verfahren zur Herstellung von derartigen Partikeln, bei dem man eine wäßrig-alkoholische Suspension der oxidischen Primärpartikel mit einem Silanisierungsmittel der Formel I umsetzt.

Gegenstand der Erfindung ist darüberhinaus die Verwendung dieser Partikel als Füll- oder Modifizierungsmittel in Polymermaterialien, insbesondere solchen für die Herstellung von Folien, vorzugsweise auf Polyesterbasis.

Gegenstand der Erfindung sind schließlich noch Polyesterfolien, enthaltend die vorstehend charakterisierten Partikel als Füll- oder Modifizierungsmaterial in kovalent eingebundener Form.

Die erfindungsgemäßen Oxidpartikel mit einer Oberflächenmodifizierung durch kovalent gebundene organische Gruppen sind erhältlich durch Behandlung entsprechender oxidischer Primärpartikel mit einem Silanisierungsmittel der Formel I.

Als Basismaterialien der oxidischen Primärpartikel kommen prinzipiell alle festen anorganischen Oxide in Betracht, die einer chemischen Reaktion an der Partikeloberfläche mit an sich bekannten Silanisierungsmitteln unter Ausbildung kovalenter Element-Sauerstoff-Siliciumbindungen zugänglich sind. Voraussetzung hierfür ist das Vorliegen freier oder hydratisierter Element-O- oder Element-OH-Gruppen an der Partikeloberfläche. Dies trifft zu für praktisch alle Metalloxide sowie einige Halbmetalloxide wie SiO₂ und entsprechende Mischsysteme. Bevorzugte Basismaterialien sind SiO₂, TiO₂, ZrO₂, Al₂O₃ aber auch V₂O₅, Nb₂O₅ sowie Mischsysteme von zwei oder mehr der vorgenannten Oxide. Unter Mischsysteme fallen auch komplexe mineralische Systeme wie Silikate, Aluminate, Alumosilikate etc.

Im Hinblick auf die spätere Anwendung als Füll- oder Modifizierungsmittel in Polymermaterialien, insbesondere als die Gleiteigenschaften verbessernde Modifizierungsmittel in Polymerfolien, sind solche oxidischen Primärpartikel bevorzugt, die als sphärische, unporöse, in hochmonodisperser Form vorliegende Partikel erhalten werden können. Oxidpartikel mit diesen Eigenschaften und Verfahren zu ihrer Herstellung sind an sich aus dem Stand der Technik bekannt. Vornehmlich sind hierbei solche Oxidpartikel in Betracht zu ziehen, die sich durch hydrolytische Polykondensation aus Alkoholatverbindungen entsprechender Elemente erhalten lassen, wobei die Reaktionsbedingungen so gesteuert werden können, daß sie in Form monodisperser, kompakter, sphärischer Partikel anfallen.

Die grundliegenden Reaktionsbedingungen zur Herstellung von SiO₂-Partikeln durch hydrolytische Polykondensation sind beispielsweise aus den Publikationen W. Stöber et al. in J. Colloid and Interface Science 26, 62 (1968) und 30, 568 (1969) sowie dem US-Patent 3,634,588 zu entnehmen. Nach dieser Methode können auch andere Partikel, wie z.B. TiO₂ oder ZrO₂ hergestellt werden. Die so hergestellten Partikel zeigen aber oft große Standardabweichungen für die Teilchendurchmesser und weisen eine gewisse Porosität auf.

Für die Herstellung von hochmonodispersen, unporösen, kugelförmigen SiO₂-Partikeln, die eine Standardabweichung von nicht mehr als 5 % aufweisen, wird auf EP 0 216 278 hingewiesen, die ein entsprechend abgestelltes Herstellungsverfahren auf Basis von hydrolytischer Polykondensation offenbart. Kern dieses Verfahrens, das für die Herstellung der Partikel gemäß vorliegender Erfindung bevorzugt wird, ist eine zweistufige Vorgehensweise. Hierbei wird zunächst durch hydrolytische Polykondensation von Tetraalkoxysilanen in wäßrig-alkalischammoniakalischem Medium ein Sol bzw. eine Suspension von Primärteilchen gebildet, die man daran anschließend durch dosierte Zugabe von weiterem Tetraalkoxysilan auf die gewünschte Endgröße bringt.

Das Verfahren gemäß EP 0 216 278 ist ohne weiteres und mit gleichem Ergebnis auf andere Oxide und auch auf Mischoxidsysteme übertragbar.

Ein sinngemäßes Verfahren zur Herstellung verschiedener Metalloxide in Form sphärischer Partikel mit enger Teilchengrößenverteilung ist EP 0 275 688 zu entnehmen.

Ein entsprechendes Zweistufenverfahren zur Herstellung unterschiedlicher Metalloxide und auch Mischoxide, die darüber hinaus an der Oberfläche noch glykolische Gruppen chemisch gebunden haben, ist in EP 0 391 447 beschrieben.

Nach den vorgenannten Verfahrensweisen lassen sich Oxidpartikel auf Basis der oben als bevorzugt gekennzeichneten Oxide problemlos und in Bezug auf Teilchengröße, Unporosität und Monodispersität je nach Wunsch herstellen.

Im Hinblick auf die spätere Anwendung sind Primärpartikel mit Teilchendurchmesser von 10 nm bis 20 µm bevorzugt.

Die Auswahl aus den unterschiedlichen Basismaterialien für die oxidischen Primärpartikel bzw. im Falle von Mischsystemen deren qualitative und quantitative Zusammensetzung steht zunächst grundsätzlich im Belieben. Sie kann aber auch nach Maßgabe bestimmter, gegebenenfalls vorgegebener optischer Eigenschaften von Füllmittel und/oder Polymermaterial erfolgen. So kann es beispielsweise wünschenswert sein, den optischen Brechungsindex der oxidischen Partikel in vorbestimmter Weise an den des Polymermaterials anzupassen. Für die Herstellung derartiger Brechungsindex-angepaßter Oxidpartikel und ihre Anwendung sei auf DE 42 19 287 hingewiesen.

Die zur Oberflächenmodifizierung der oxidischen Primärpartikel einzusetzenden Silanierungsmittel der Formel I sind erfindungsgemäß so strukturiert, daß sie solche funktionelle Gruppen aufweisen, mit denen sich eine kovalente Einbindung in das Polymermaterial erreichen läßt. In Formel I ist dementsprechend an dem zentralen Si-Atom der Silicium-organischen Verbindung über eine Spacergruppierung aus 1-6 Methyleneinheiten und eine Verknüpfungseinheit, die eine Einfachbindung, Sauerstoff, eine Amino-, Amid-, oder Urethan-Gruppe sein kann, eine derartige zur Reaktion mit Polymeren, deren Bestandteilen bzw. Ausgangsprodukten befähigte Gruppe (R⁴) gebunden. Die funktionelle Gruppe R⁴ ist so strukturiert, daß sie Carbonsäuregruppen bzw. Abwandlungsprodukte hiervon wie Carbonsäureester-, Carbonsäureamid- und Carbonsäureanhydrid-Gruppen und/oder ethylenisch ungesättigte Gruppen aufweist. Im Hinblick auf einen kovalenten Einbau in Polymermaterialien auf Polyesterbasis sind als funktionelle Gruppe R₄ solche bevorzugt, die sich von aliphatischen, cycloaliphatischen oder aromatischen Dicarbonsäuren ableiten. Als zugrundeliegende aliphatische Dicarbonsäure kommen solche mit bis zu insgesamt 15 C-Atomen in Betracht. Bevorzugt sind Malonsäure und Bernsteinsäure, deren Ester, Amide bzw. Anhydride. Bei den cycloaliphatischen und aromatischen Dicarbonsäuren können die Säuregruppen vom alicyclischen bzw. aromatischen Ring jeweils durch bis zu 6 C-Atome getrennt sein. Bevorzugt sind hierbei Phthalsäure und Terephthalsäure, deren Ester sowie Phthalsäureanhydrid.

Ist die funktionelle Gruppe R⁴ von Acrylsäure bzw. Acrylester und Homologen hiervon abgeleitet, so sind die entsprechenden Produkte vorzugsweise für den kovalenten Einbau in Polymermaterialien auf Basis von Olefin-Polymeren wie insbesondere Polypropylen, oder von Acrylat- und Vinylpolymeren vorgesehen.

Von den verbleibenden drei Resten R¹, R², R³ am Si-Atom der Verbindungen der Formel I muß zumindest einer, vorzugsweise zwei oder alle drei, eine hydrolytisch abspaltbare Gruppe wie Chlor oder Alkoxy mit 1-6 C-Atomen sein, ansonsten aber Alkyl mit 1-6 C-Atomen. Durch die hydrolytische Abspaltbarkeit wird die Befähigung der Verbindungen de Formel I zur kovalenten Bindungsknüpfung zu dem oxidischen Primärpartikel und somit als Silanisierungsmittel zu wirken, bedingt. Die Silanisierungsmittel der Formel I sind zum Teil handelsüblich, ansonsten aber durch an sich bekannte Methoden herstellbar. Wesentliche Ausgangsprodukte für die Carbonsäure-derivatisierten Silane sind einerseits Mono-, Di- oder Trichlorsilane bzw. Mono-, Di- oder Trialkoxysilane wie z.B. Chlordimethylsilan, Methyldichlorsilan, Trichlorsilan, Trimethoxysilan, Triethoxysilan, Ethoxydimethylsilan und Dimethoxyethylsilan. Auf der anderen Seite sind es Dicarbonsäuren bzw. Derivate wie z.B. Malonsäure, Malonsäurediethylester, Bernsteinsäure, Bernsteinsäureanhydrid, 2-Amino-Terephthalsäure. Die Verknüpfung von Silankomponente und Dicarbonsäurekomponente kann zweckmäßigerweise durch Umsetzung im Sinne der Malonestersynthese mit einem Alkenylhalogenid wie z.B. 3-Brompropen oder mit einem Alkencarbonsäurechlorid wie z.B. Vinylessigsäurechlorid und anschließende Hydrosilylierung erfolgen.

Beispiele für Silanisierungsmittel der Formel I sind:

Triethoxysilylpropylmalonsäurediethylester (Ethoxydimethylsilylpropyl)-bernsteinsäureanhydrid (Triethoxysilylmethyl)-bernsteinsäurediethylester 4-(Methyldiethoxysilyl)-butansäure-(terephthalsäuredimethylester)-amid

Die Oberflächenmodifizierung der oxidischen Primärpartikel mit den Silanisierungsmitteln der Formel I kann in völliger Übereinstimmung mit Methoden vorgenommen werden, wie sie für die Herstellung von als chromatographische Sorbentien gebräuchlichen Kieselgelen üblich sind. Die oxidischen Primärpartikel werden im einfachsten Fall mit dem Silanisierungsmittel direkt in Kontakt gebracht oder in einer Lösung des Silanisierungsmittels suspendiert und die Reaktion so lange und unter geeigneten Bedingungen durchgeführt, bis eine weitgehende oder vollständige Oberflächenbelegung mit kovalent gebundenen organischen Gruppen erfolgt ist.

Für die erfindungsgemäßen oberflächenmodifizierten Oxidpartikel hat es sich als besonders günstig erwiesen, die Primärpartikel in Form einer wäßrig-alkoholischen Suspension mit dem Silanisierungsmittel der Formel I umzusetzen. Dieses Vorgehen ist deswegen günstig, weil bei der bevorzugten Herstellung der Primärpartikel durch hydrolytische Polykondensation von Alkoholatverbindungen entsprechender Elemente die Partikel gleich in Form einer wäßrig-alkoholischen Suspension anfallen bzw. nach den üblichen Aufreinigungsschritten in einer solchen Form vorliegen.

Die erfindungsgemäßen Oxidpartikel können überall da als Füll- oder Modifizierungsmittel in Polymermaterialien vorteilhaft eingesetzt werden, wo mit der Oberflächenmodifizierung mit kovalent gebundenen organischen Gruppen, insbesondere solchen, die zur kovalenten Bindungsknüpfung mit dem Polymermaterial befähigt sind, Verbesserungen bei der Herstellung und/oder bei den Eigenschaften des Endproduktes einhergehen.

Durch die kovalente Bindungsknüpfung zwischen Oxidpartikel und Polymermaterial wird ein besonders fester Verbund von anorganischem Partikel und organischem Matrixmaterial erreicht. Die Reiß- oder Bruchfestigkeit des Polymermaterials bzw. Polymerproduktes wird erheblich verbessert im Vergleich mit einem Material, das mit anorganischen Partikeln nach dem Stand der Technik verfüllt ist. Besonders augenfällig werden diese Verbesserungen bei Polymerfolien, insbesondere Polyesterfolien, die die erfindungsgemäßen Partikel als Füll- oder Modifizierungsmittel in kovalent eingebundener Form enthalten. Die Partikel sind hier äußerst fest in dem Folienmaterial bzw. im Oberflächenbereich der Folie eingebunden. Bei den Verstreckungsvorgängen zur Erzeugung einer mono- oder biaxialen Orientierung der Folien ist das Auftreten von wannen- bzw. muldenförmigen Vertiefungen an den Stellen der Folienoberfläche, wo Partikel sitzen, in Ausmaß und Umfang deutlich reduziert. Die Partikel bleiben darüberhinaus erheblich besser lagefixiert, was sich in einem überraschend geringerem Abrieb der Teilchen von der Folie äußert. Als Folge hiervon behält die Folie gleichbleibend gute Gleiteigenschaften. Diese beiden Eigenschaftsverbesserungen sind beispielsweise dann von besonderer Wichtigkeit, wenn die Folien als Magnetbandträgerfolien zur Anwendung kommen, wo guter Bandlauf und geringe Verschmutzungsneigung durch Partikelabrieb essentiell sind. Die Reduzierung von "voids" ist auch bei Kondensatorfolien von besonderer Wichtigkeit, da hierdurch die Durchschlagfestigkeit der als Dielektrikum dienenden Folie verbessert ist.

Die Einarbeitung der erfindungsgemäßen Oxidpartikel in das jeweilige Polymermaterial kann völlig analog dazu erfolgen, wie es für Partikel nach dem Stand der Technik bekannt und üblich ist. Zweckmäßigerweise wird für die Einarbeitung eine solche Verfahrensstufe gewählt, in der die Rahmenbedingungen z.B. bezüglich Temperatur so sind, daß eine Reaktion der an das Partikel gebundenen funktionellen Gruppe (R⁴) mit den Bestandteilen des Polymermaterials bzw. deren Vorstufen wie etwa Monomere, Oligomere, Polymere, Copolymere, Polymerisationskatalysatoren erfolgen kann. Je nach Natur der funktionellen Gruppe R⁴ erfolgt die Bindungsknüpfung durch Veresterung, Umesterung, Polyaddition, Polykondensation oder olefinische Polymerisation.

Die Einarbeitung und kovalente Einbindung der Partikel kann demnach auf der Stufe der Herstellung des Polymers aus monomeren und/oder oligomeren Vorstufen, bei der Rezeptierung des Rohmaterials, aus dem dann der Polymerformkörper bzw. -artikel nach an sich bekannten Methoden hergestellt wird, oder auf der Stufe der Herstellung der letzteren, beispielsweise durch Zugabe bei der Extrusion des Materials zur Ausformung des Produktes.

Bei der Folienherstellung werden die Füllpartikel vorzugsweise in Form einer Suspension in einem kompatiblen organischen Lösungsmittel wie etwa Glykol auf der Stufe der Rohstoffrezeptierung oder bei der Extrusion des Folienrohstoffes zugegeben. Die erfindungsgemäßen Oxidpartikel weisen hierbei die gleichen vorteilhaften Eigenschaften in Bezug auf Dispergierbarkeit in der Suspension und/oder gleichmäßige Einarbeitbarkeit in den Polymerrohstoff auf wie bekannte oxidische Füllstoffe, die eine organische Oberflächenmodifizierung durch konventionelle Silanisierungsmittel aufweisen.

### Beispiele

### 1. Synthese von Silanisierungsmitteln

### 1.1 Triethoxysilylpropylmalonsäurediethylester

Zu 128,1 g Malonsäurediethylester in 800 ml trockenem Toluol werden unter Inertgas 19,1 g kleingeschnittenes Natriummetall gegeben. Durch Erwärmung auf 80-90 °C wird die Reaktion in Gang gebracht. Der entstandene Kristallbrei wird durch Zugabe von Ethanol gelöst.

Zu dem Reaktionsgemisch tropft man innerhalb von 30 Minuten bei Raumtemperatur eine Mischung aus 106,5 g 3-Brom-1-propen und 160 ml Toluol, erwärmt dann auf 80 °C und behält diese Temperatur ca. 1 Stunde bei. Das Lösungsmittel wird dann im Vakuum abgezogen und das Produkt von dem sich gebildeten festen Natriumbromid mit Toluol abgetrennt. Durch fraktionierte Destillation der Toluolphase erhält man bei 44-50 °C / 0,25-0,30 torr Propenmalonsäurediethylester.

61,8 g Propenmalonsäurediethylester werden unter Inertgas mit 8,2 g Triethoxysilan und 35 mg Hexachloroplatinsäure (als Katalysator) gemischt. Unter Rühren steigt die Temperatur rasch auf 90 °C an und man läßt noch 7 Stunden bei dieser Temperatur ausreagieren. Die erhaltene tiefbraune Lösung wird der fraktionierten Destillation unterworfen. Man erhält bei 115-130 °C / 0,25-0,40 torr Triethoxysilylpropylmalonsäurediethylester.

### 1.2 4-(Methyldimethoxysilyl)-butansäure-(terephthalsäuredimethylester)-amid

Zu 167,4 g (0,8 mol) Aminoterephthalsäuredimethylester in 3 1 Aceton gibt man 110 mg Butylbrenzkatechin (als Polymerisationsinhibitor) und 180 g trockenes Na₂CO₃ (wasserfrei). Zu diesem Gemisch tropft man innerhalb von 20 Minuten bei 35-40 °C 89 g (0,85 mol) Vinylessigsäurechlorid und kocht dann 4 Stunden am Rückfluß. Die filtrierte Lösung wird auf 1 l eingeengt und in der Kälte kristallisiert. Die isolierten Kristalle von N-Butenoylaminoterephthalsäuredimethylester werden einmal aus 1,2 l Methanol und anschließend aus einem Gemisch von 426 ml Essigester und 344 ml Methanol umkristallisiert.

55,5 g (0,2 mol) N-Butenoylaminoterephthalsäuredimethylester werden unter Inertgas mit 175 mg Hexachloroplatinsäure (als Katalysator) und 85 g (0,8 mol; Überschuß) Methyldimethoxysilan gemischt. An den Kristallen des Katalysators sich bildende Gasbläschen zeigen das sofortige Anspringen der Reaktion an. Es wird in kurzen Abständen aufgerührt, nach etwa einer halben Stunde bis zur Rückflußtemperatur (ca. 60 °C) erhitzt und 25 Stunden am Rückfluß gehalten. Das Reaktionsgemisch wird im Vakuum bis auf ein tiefbraunes Öl eingeengt. Das Öl wird mit 400 ml n-Hexan aufgenommen, wobei das Produkt in Form gelber Kristalle auskristallisiert. Durch Lösen in heißem n-Hexan sowie Kristallisation in der Kälte und Trocknung der Kristalle im Vakuum erhält man 4-(Methyldimethoxysilyl)-butansäure-terephthalsäuredimethylester)-amid.

### 2. Herstellung sphärischer, unporöser, monodisperser SiO₂-Partikel

Zu einem auf 30 °C thermostatierten Gemisch aus 600 ml Ethanol, 225 ml Wasser und 140 ml 25%igem Ammoniak gibt man unter intensiver Durchmischung in einem Guß eine auf gleiche Temperatur eingestellte Lösung aus 90 ml Tetraethoxysilan in 90 ml Ethanol. Man rührt noch intensiv für 15 Sekunden und läßt dann das Reaktionsgemisch für eine Stunde ruhig stehen.

Die entstandenen Teilchen liegen im Reaktionsgemisch dispergiert vor und werden nun durch wiederholtes Abdestillieren und Aufnehmen in Wasser ammoniakfrei gewaschen.

Man erhält dichte, sphärische Teilchen mit Partikeldurchmesser von 500 ± 15 nm, die in einem Gemisch aus Wasser und Ethanol im Volumenverhältnis 2 : 1,5 suspendiert werden.

### 3. Oberflächenmodifizierung

3.1 Zu einer wie unter 2. erhaltenen Suspension von SiO₂-Primärpartikeln gibt man ein Gemisch von 1,2 g Triethoxysilylpropylmalonsäurediethylester (gemäß 1.1) in 25 ml Ethanol. Es wird noch 6 Stunden am Rückfluß gekocht, danach das Lösungsmittel abdestilliert und die Partikel mit Ethanol gewaschen und getrocknet.

Man erhält sphärische, unporöse, monodisperse Si0₂-Partikel mit Partikeldurchmesser von 500 ± 15 nm mit an der Oberfläche gebundenen Malonsäurediethylester-Gruppen.

3.2 Zu einer Suspension von SiO₂-Primärpartikeln wie unter 2. erhalten, wird eine Lösung von 0,8 g Ethoxydimethylpropylbernsteinsäureanhydrid (Hersteller: Fa. Wacker, Burghausen) in 25 ml Ethanol zugetropft. Die Mischung wird 6 Stunden lang am Rückfluß gehalten und dann wie unter 3.1 aufgearbeitet. Man erhält sphärische, unporöse, monodisperse SiO₂-Partikel mit Partikeldurchmesser von 500 ± 15 nm mit an der Oberfläche gebundenen Bernsteinsäureanhydrid-Gruppen.

3.3 Zu einer ethanolischen Suspension von SiO₂-Primärpartikeln gemäß 2. gibt man eine Lösung von 4-(Methyldimethoxysilyl)-butansäure-(terephthalsäuredimethylester)-amid (gemäß 1.2) in 20 ml Ethanol. Nach 6 Stunden Kochen am Rückfluß wird wie unter 3.1 aufgearbeitet. Man erhält sphärische, unporöse, monodisperse SiO₂-Partikel mit Partikeldurchmesser von 500 ± 15 nm mit an der Oberfläche gebundenen Terephthalsäuredimethylester-Gruppen.

## Patentansprüche

1. Oxidpartikel mit einer Oberflächenmodifizierung durch kovalent gebundene organische Gruppen, welche funktionelle Gruppen aufweist, durch die sich eine kovalente Einbindung in Polymermaterialien erreichen läßt, erhältlich durch chemische Reaktion von freien oder hydratisierten Element-O- oder Element-OH-Gruppen an der Partikeloberfläche der oxidischen Primärpartikel mit einem Silanisierungsmittel unter Ausbildung kovalenter Element-Sauerstoff-Siliciumbindungen, wobei ein Silanisierungsmittel der Formel I
[R¹R²R³]Si-(CH₂)ₗ-X-R⁴ (I)
worin
R¹ Cl oder Alkoxy mit 1 - 6 C-Atomen
R², R³ Alkyl mit 1 - 6 C -Atomen oder die Bedeutung von R¹
I die Zahlen 1 - 6
X eine Einfachbindung, O, NH, CONH, NHCONH
R⁴ 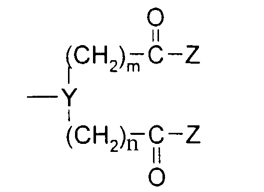 mit Y = CH oder 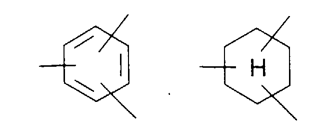 Z = OR oder zwei Reste Z gemeinsam
―O―, ―NR―
und m, n die Zahlen 0 - 6,
oder 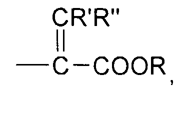 wobei X eine Einfachbindung ist, mit R, R', R" = H oder Alkyl mit 1-6 C-Atomen
bedeuten,
verwendet wird, welches nach erfolgter Reaktion weiterhin funktionelle Gruppen R⁴ aufweist.

2. Oxidpartikel nach Anspruch 1, erhältlich aus Primärpartikeln auf Basis von SiO₂, TiO₂, ZrO₂, Al₂O₃, V₂O₅, Nb₂O₅ oder Mischsystemen hiervon.

3. Oxidpartikel nach den Ansprüchen 1 oder 2, erhältlich aus sphärischen, unporösen, in hoch monodisperser Form vorliegenden oxidischen Primärpartikeln, die durch hydrolytische Polykondensation von Alkoholatverbindungen entsprechender Elemente gewonnen werden.

4. Oxidpartikel nach den Ansprüchen 1 bis 3, erhältlich aus oxidischen Primärpartikeln mit Teilchendurchmessern von 10 nm bis 20 µm.

5. Verfahren zur Herstellung von Partikeln nach den Ansprüchen 1 bis 4, dadurch gekennzeichnet, daß man eine wäßrig-alkoholische Suspension der oxidischen Primärpartikel mit einem Silanisierungsmittel der Formel I umsetzt.

6. Verwendung der Partikel nach den Ansprüchen 1 bis 4 in Polymermaterialien als Füll- und Modifizierungsmittel, welche funktionelle Gruppen aufweisen mit denen eine kovalente Einbindung in das Polymermaterial erzeugt wird.

7. Verwendung nach Anspruch 6, dadurch gekennzeichnet, daß als Polymermaterialien Polymerfolien, vorzugsweise Polyesterfolien, eingesetzt werden.

8. Polymermaterial mit ausgeprägter Reiß- und Bruchfestigkeit, dadurch gekennzeichnet, daß an der Oberfläche des Polymermaterials Oxidpartikel gemäß der Ansprüche 1 - 4 kovalent über funktionelle Gruppen des Silans gebunden sind, welches wiederum über organische Gruppen kovalent an die Oberfläche der oxidischen Primärpartikel gebunden ist.

9. Polymermaterial nach Anspruch 8, dadurch gekennzeichnet, daß das Polymermaterial eine Polyesterfolie ist.

10. Verwendung des Polymermaterials gemäß der Ansprüche 8 bis 9 als Trägerfolien für magnetische Aufzeichnungsmedien.

## Claims

1. Oxide particles with a surface modification by covalently bonded organic groups, having functional groups by means of which covalent incorporation into polymer materials can be achieved, obtainable by chemical reaction of free or hydrated element-O or element-OH groups on the particle surface of the oxidic primary particles with a silanizing agent, with the formation of covalent element-oxygen-silicon bonds, using a silanizing agent of the formula I
[R¹R²R³]Si-(CH₂)ₗ-X-R⁴ (I)
wherein
R¹ is Cl or alkoxy having 1-6 carbon atoms
R² and R³ are alkyl having 1-6 carbon atoms or are as defined for R¹
l is the numbers 1-6
X is a single bond, O, NH, CONH or NHCONH
R⁴ is 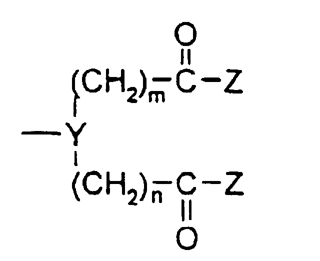 where Y = CH or 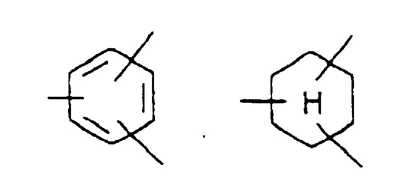 Z = OR or two radicals Z together are -O- or -NH-
and m and n are the numbers 0-6,
or 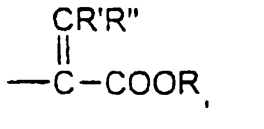 where X is a single bond, and where R, R' and R" = H or alkyl having 1-6 carbon atoms,
the said agent continuing to have functional groups R⁴ after reaction has taken place.

2. Oxide particles according to Claim 1, obtainable from primary particles based on SiO₂, TiO₂, ZrO₂, Al₂O₃, V₂O₅, Nb₂O₅ or mixed systems thereof.

3. Oxide particles according to Claim 1 or 2, obtainable from spherical, non-porous oxidic primary particles which are in highly monodisperse form and are obtained by hydrolytic polycondensation of alkoxide compounds of corresponding elements.

4. Oxide particles according to Claims 1 to 3, obtainable from oxidic primary particles having particle diameters of from 10 nm to 20 µm.

5. Process for preparing particles according to Claims 1 to 4, characterized in that an aqueous-alcoholic suspension of the oxidic primary particles is reacted with a silanizing agent of the formula I.

6. Use of the particles according to Claims 1 to 4 in polymer materials as fillers and modifiers which have functional groups with which covalent incorporation into the polymer material is produced.

7. Use according to Claim 6, characterized in that polymer materials used are polymer films, preferably polyester films.

8. Polymer material with pronounced tensile strength and breaking strength, characterized in that oxide particles according to Claims 1-4 are covalently bonded on the surface of the polymer material by way of functional groups of the silane, which is in turn covalently bonded to the surface of the oxidic primary particles by way of organic groups.

9. Polymer material according to Claim 8, characterized in that the polymer material is a polyester film.

10. Use of the polymer material according to Claims 8 and 9 as carrier films for magnetic recording media.

## Revendications

1. Particule d'oxyde avec une modification de la surface par des groupes organiques liés de manière covalente, qui présente des groupes fonctionnels par l'intermédiaire desquels une inclusion par liaison covalente dans des matériaux polymères peut être obtenue et qui peut être obtenue par réaction chimique de groupes O élémentaire ou OH élémentaire libres ou hydratés sur la surface de la particule d'oxyde primaire avec un agent de silanisation avec formation de liaisons oxygène élémentaire/silicium, dans laquelle on utilise un agent de silanisation de la formule I
[R¹R²R³]Si-(CH₂)ₗ-X-R⁴ (I)
dans laquelle
R¹ est Cl ou un alcoxy ayant de 1 à 6 atomes de C,
R², R³ sont des alkyles ayant de 1 à 6 atomes de C ou ont la même signification que R¹,
1 est un nombre de 1 à 6,
X est une liaison simple, O, NH, CONH, NHCONH,
R⁴ est 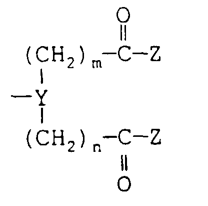 où Y = CH ou bien 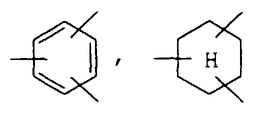 Z = OR ou bien deux résidus Z ensemble sont -O-, -NR-,
et m, n sont des nombres de 0 à 6,
ou 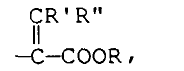 où X est une liaison simple, avec R, R' et R" = H ou un alkyle ayant de 1 à 6 atomes de C,
ledit agent de silanisation présentant toujours des groupes R⁴ fonctionnels une fois la réaction effectuée.

2. Particule d'oxyde selon la revendication 1, pouvant être obtenue à partir de particules primaires à base de SiO₂, TiO₂, ZrO₂, Al₂O₃, V₂O₅, Nb₂O₅ ou de systèmes mixtes de ceux-ci.

3. Particule d'oxyde selon la revendication 1 ou la revendication 2, pouvant être obtenue à partir de particules d'oxyde primaires sphériques, non poreuses, présentes sous forme hautement monodispersée, qui ont été obtenues par polycondensation hydrolytique de composés d'alcoolates des éléments correspondants.

4. Particule d'oxyde selon les revendications 1 à 3, pouvant être obtenue à partir de particules d'oxyde primaires ayant des diamètres de particules de 10 nm à 20 µm.

5. Procédé de fabrication de particules selon les revendications 1 à 4, caractérisé en ce que l'on fait réagir une suspension mixte aqueuse et alcoolique des particules d'oxyde primaires avec un agent de silanisation de la formule I.

6. Utilisation de la particule selon les revendications 1 à 4 dans des matériaux polymères comme matière de charge et agent de modification présentant des groupes fonctionnels par l'intermédiaire desquels une inclusion par liaison covalente dans le matériau polymère est réalisée.

7. Utilisation selon la revendication 6, caractérisée en ce que l'on utilise comme matériaux polymères des feuilles de polymère, de préférence des feuilles de polyester.

8. Matériau polymère avec une grande résistance à la déchirure et à la rupture, caractérisé en ce que des particules d'oxyde selon les revendications 1 à 4 sont liées de manière covalente à la surface du matériau polymère par l'intermédiaire de groupes fonctionnels du silane, lequel est lui-même lié de manière covalente par l'intermédiaire de groupes organiques à la surface des particules d'oxyde primaires.

9. Matériau polymère selon la revendication 8, caractérisé en ce que le matériau polymère est une feuille de polyester.

10. Utilisation du matériau polymère selon les revendications 8 à 9 comme feuille substrat pour des supports d'enregistrement magnétiques.
